# EUROPEAN PATENT SPECIFICATION

(11) **EP 4 113 341 B1**
(45) Date of publication and mention of the grant of the patent: **30.09.2026**
(21) Application number: 21382578.9
(22) Date of filing: 30.06.2021
(51) Int. Cl.: G06F 21/57, H04L 9/40, H04W 12/40, H04L 9/32, H04L 9/06, H04L 9/08

(54) **ENCRYPTION SCHEME FOR PROVIDING SOFTWARE UPDATES TO AN UPDATE AGENT**
VERSCHLÜSSELUNGSSCHEMA ZUR BEREITSTELLUNG VON SOFTWARE-UPDATES FÜR EINEN UPDATE-AGENTEN
SCHÉMA DE CHIFFREMENT POUR FOURNIR DES MISES À JOUR DE LOGICIEL À UN AGENT DE MISE À JOUR

(43) Date of publication of application: 04.01.2023
(73) Proprietor: Giesecke+Devrient Mobile Security Germany GmbH, 81677 München (DE)
(72) Inventor: Gifre, Clara, 08028 Barcelona (ES); Patino, David, 08620 Sant Vicenc dels Horts (ES); Ruau, Federico, 08907 Hospitalet de Llobregat (ES)
(74) Representative: LKGLOBAL Partnerschaftsgesellschaft mbB

(56) References cited:
- US-A1- 2014 025 940
- US-A1- 2020 162 247
- US-B1- 9 537 657
- V GSMA ET AL: "GSM Association Non-confidential Official Document SGP.22 -SGP.22 RSP Technical Specification Security Classification: Non-confidential GSM Association Non-confidential Official Document SGP.22 -SGP.22 RSP Technical Specification", 5 June 2020 (2020-06-05), pages 41, XP055748263, Retrieved from the Internet <URL:https://www.gsma.com/esim/wp-content/uploads/2020/06/SGP.22-v2.2.2.pdf> [retrieved on 20201109]
- ANONYMOUS: "Galois/Counter Mode - Wikipedia", 10 April 2024 (2024-04-10), pages 1 - 6, XP093150056, Retrieved from the Internet <URL:https://en.wikipedia.org/wiki/Galois/Counter_Mode> [retrieved on 20240410]

## Description

The present invention relates to updating a piece of software, such as an operating system, on a secure element, and more particularly, to a method, an update agent and a system for implementing an encryption scheme for providing a software image to a secure element.

### BACKGROUND OF THE INVENTION

Recently, mobile devices configured to employ electronic subscriber profiles for communicating on mobile networks have emerged. Such mobile devices are typically equipped with smart cards containing electronic/embedded Secure Elements (SE), such as electronic/embedded universal integrated circuit cards (eUICCs), smartSD, or smart microSD, to name a few.

A secure element is a tamper resistant element, TRE, that provides a secure memory and execution environment within a smart card/ device in which application code and application data can be securely stored and administered. The secure element ensures that access to the data stored on the card is provided only when authorized.

A secure element designed to be used in telecommunication products, such as mobile devices, is configured to store one or more electronic subscriber profiles, in particular electronic subscriber identification module (eSIM) profiles, that may allow mobile devices to connect to one or more mobile networks. A subscriber profile (e.g., eSIM profile) may be generated by a mobile network operator (MNO) and may be downloaded to a mobile network device. The subscriber profile may then be installed on the secure element of the mobile device and used for communication over a corresponding mobile network by the mobile device.

Historically, a secure element's software does not vary once it has surpassed the production phase. This means that if any problem is found that is related to the software within it (new attacks or vulnerabilities, new updates on sector specification, the expected life cycle of the devices using it), the only possible action is to change the whole secure element. This makes it particularly difficult to keep up to date with the market needs in terms of production (with software updates after production being impossible), especially when the production is bound to be executed within a certified environment in the factory.

The GSMA remote provisioning architecture provides a platform for implementing a procedure to load software onto a secure element (SE) or Tamper Resistant Element (TRE). The GSMA platform allows to implement a change in the profiles stored in the secure element by providing to the secure element a Bound Installation Package containing profile updates.

To ensure integrity of the Bound Installation Package, the GSMA remote provisioning architecture implements an encryption scheme based on the SCP03t algorithm. The SCP03t algorithm involves two different encryption algorithms defined in the Advanced Encryption Standard (AES), namely a first algorithm, AES CBC, to ensure confidentiality, and a second algorithm, AES CMAC, to grant authentication and integrity. That is, SCP03t follows the Encrypt-the-MAC style, having separate algorithms for encryption and integrity / authenticity.

This encryption scheme implemented within the GSMA platform requires several exchanges between the TRE and the server before it can prepare a Bound Profile Package that contain the profiles used for the load, which might not be optimal for a broadcast deploy of a new piece of software.

In addition, due to the complex SPC03t-based security scheme, the Bound Profile Packages provided to the secure element have a complex structure. The update agent within the secure element needs to perform, upon receiving a Bound Profile Package, time consuming decryption algorithms to be able to extract the required data from the Bound Profile Package.

Furthermore, the GSMA platform does not allow for implementing a change in the basic software present in the SE/TRE, such as for instance a change of an operating system, as the security scheme provided lacks extra layers of protection which might be required for the deployment of critical data such as a new operating system.

Recently, an operating system update scheme has been introduced, to facilitate updating an operating system installed on a SE/ITR once the production phase of the SE/TRE is finished.

Some of the uses of the download/update security schemes might require to be as fast as possible for several reasons. Some examples might be the need to apply this to several targets on a production line, or having a constraint due to this process being allocated inside another one, like the secure element being updated as part of a device update, and the manufacturer of the device setting such restriction. Customers' requirements of minimizing delays during software update are therefore difficult to meet when implementing a SCP03t-based security scheme for facilitating a secure software download onto a secure element.

V Gsma et al.: "GSM Association Non-confidential Official Document SGP.22-SGP.22 RSP Technical Specification Security Classification : Non-confidential GSM Association GSM Association Non-confidential Official Document SGP.22-SGP.22 RSP Technical Specification"provides a technical description of the GSMA's Remote SIM Provisioning (RSP) Architecture for consumer devices. The document in particular provides a technical description of the eUICC architecture, the interfaces used within the RSP architecture, and the security functions used within the RSP architecture.

US 2020/162247 A1 describes a method for firmware transfer from a server to a primary platform. A device operates a primary platform (PP) within a tamper resistant element (TRE) and receives encrypted firmware images for operating within the primary platform. The TRE stores in nonvolatile memory of the TRE a PP static private key (SK-static.PP), a server public key (PK.IDS1), and a set of cryptographic parameters. The TRE generates a one-time PM key pair of SK-OT1.PP and PK-OT1.PP and sends the public key PK-OT1.PP to a server. The TRE receives a one-time public key from the server comprising PK-OT1.IDS1. The TRE derives a ciphering key using an elliptic curve Diffie Hellman key exchange and the SK-static.PP, SK-OT1.PP, PK.IDS1, and PK-OT1.IDS1 keys. The TRE decrypts the encrypted firmware using the derived ciphering key. The primary platform comprises a smart secure platform (SSP) and the decrypted firmware comprises a virtualized image for the primary platform.

It is therefore desirable to provide a solution for managing the encryption of a software image in a more efficient way, which address the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a method for providing a software image to a secure element, the method comprising converting the software image into a sequence of ciphered blocks; protecting the sequence of ciphered blocks with an authentication tag to obtain a sequence of protected blocks; and transmitting the sequence of protected blocks to an update agent on the secure element. The steps of converting the software image into a sequence of ciphered blocks and protecting the sequence of ciphered blocks with an authentication tag are implemented by an authenticated encryption function using a same block cipher. The method further comprises segmenting the software image into a sequence of input blocks, wherein the authenticated encryption function encrypts each input block using the block cipher, obtaining therewith the sequence of ciphered blocks. The authenticated encryption function encrypts each input block by applying a forward cipher function of the block cipher to each input block to obtain a sequence of output blocks; and performing an exclusive-OR, XOR, operation on each pair of an input block and corresponding output block to obtain the sequence of ciphered blocks. The method further comprises concatenating the sequence of ciphered blocks with additional authentication data. The authenticated encryption function further comprises applying a hash function to the sequence of ciphered blocks to obtain a hashed tag, wherein the hash function is generated using the block cipher. The hashed tag is encrypted using a nonce to obtain the authentication tag. The authentication tag is appended to the concatenated sequence of ciphered blocks to obtain the sequence of protected blocks.

The proposed method provides an efficient and secure solution for encrypting software for being loaded onto a secure element once the production of the secure element is finished. Employing an authenticated encryption function using a same block cipher both for encryption and authentication results not only in an efficient and secure solution, but facilitate hardware implementations that can achieve high speeds with low cost and low latency. Applications that require high data throughput can benefit from these highspeed implementations.

According to the invention, the authenticated encryption function encrypts each input block by applying a forward cipher function of the block cipher to each input block to obtain a sequence of output blocks; and performing an exclusive-OR, XOR, operation on each pair of an input block and corresponding output block to obtain the sequence of ciphered blocks.

One advantage of this implementation is that the forward (encrypt) direction of the block cipher can be used both for encryption and decryption. This simplifies the implementation of the security scheme, as the procedure can be implemented in hardware with reduced footprint (e.g., less memory). Moreover, for block ciphers such as AES (Advanced Encryption Standard) it can often be easier to implement efficient encryption than decryption because the internal coefficients have been optimized for this direction.

According to the invention, the method comprises concatenating the sequence of ciphered blocks with additional authentication data. Preferably, additional authenticated data includes specific configurable parameters outside the ciphered text itself, such as for instance the underlying exchange protocol, in particular, version number of the protocol message specific nonces, addresses of recipient(s), etc.

Using additional authentication data allows for validation of these parameters, as the additional authenticated data can be validated together with the ciphered text by verification of the authentication tag. An attacker could not simply change these parameters, for instance, by switch to a previous, less secure protocol number.

According to the invention, the authenticated encryption function further comprises applying a hash function to the sequence of ciphered blocks to obtain a hashed tag, wherein the hash function is generated using the block cipher.

Preferably, the hash function is a GHASH function based on operations, in particular, multiplications, in a finite Galois field. The GHASH function is used by GCM (Galois/Counter Mode) algorithm implemented within the Advanced Encryption Standard (AES), to produce a message authentication code and also supports additional authenticated data (AAD), which is authenticated using GHASH but transmitted as plaintext.

Using only one AES calculation per block of data together with a Galois field multiplication, both confidentiality and authenticity of the protected blocks to be transmitted to the secure element are ensured without the use of an additional MAC to be added to each block. More data can thus be packed within a block, reducing thus the length of the transmitted bound installation package.

According to the invention, the hashed tag is encrypted using a nonce to obtain the authentication tag. This increase further the confidentiality and integrity.

According to the invention, the authentication tag is appended to the concatenated sequence of ciphered blocks to obtain the sequence of protected blocks.

The authentication tag supports a tag-based authentication mechanism to ensure authenticity of the encrypted data, that is, to reveal accidental errors or intentional modifications of the data.

Preferably, the authentication tag comprises a cryptographic checksum on the encrypted data within the ciphered blocks.

In some embodiments of the present invention, transmitting the sequence of protected blocks to the update agent on the secure element comprises segmenting the sequence of protected blocks, wherein the first to but-last segments carry parts of the encrypted software image and the last segment carries the authentication tag; and transmitting the segments to the update agent.

A compact representation of the data (i.e., software image, updates, profiles) to be transmitted is thus achieved, in which each segment contains more data in this case. This reduces the size of the complete delivery package.

According to a second aspect of the present invention, there is provided a server, namely a subscription manager data preparation server, configured to provide protected software updates to a secure element through a bound installation package, the server being configured to generate the bound installation package from a software image by implementing an authenticated encryption function using a block cipher, to encrypt the software image and to compute an authentication tag on the encrypted software image, wherein the server is configured to perform the method according to the first aspect.

According to a third aspect of the present invention, there is provided a mobile network system for providing services to a mobile device, the mobile device comprising a secure element, the system comprising a server, namely a subscription manager data preparation server, configured to provide protected software updates to the secure element through a bound installation package; wherein the server is configured to generate a bound installation package from the software image by performing: implementing an authenticated encryption function using a block cipher to encrypt the software image using the block cipher and to compute an authentication tag on the encrypted software image using the same block cipher; and transmitting the sequence of protected blocks to an update agent on the secure element. The server is configured to perform the method of the first aspect.

According to a forth aspect of the present invention, there is provided an update agent for use in a secure element to install a software update on the secure element, the update agent being configured to: receive a sequence of protected segments containing a software image for performing the software update, the sequence having been generated by the method of the first aspect and comprising a sequence of ciphered blocks and an authentication tag; implement an authenticated decryption function to extract the software image from the sequence of ciphered blocks; and authenticate the software image by verifying the authentication tag.

Preferably, the update agent is configured to perform a software update using the software image if the authentication tag is verified, and to return a failure message otherwise.

According to a fifth aspect of the present invention, there is provided a non-transitory computer-readable medium for providing a protected software image to a secure element, comprising instructions stored thereon, that when executed on a processor, perform the steps of: generating a bound installation package from a software image to be provided to the secure element by implementing an authenticated encryption function to encrypt the software image and to compute an authentication tag on the encrypted software image using a block cipher; and transmitting the sequence of protected blocks to an update agent on the secure element. When executed on the processor, the instructions perform the steps of the first aspect.

The aspects and embodiments described herein provide an efficient and secure solution for managing the encryption of a software image to be updated on a secure element.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
- FIG. 1: shows a simplified representation of a remote eSIM provisioning system according to an embodiment;
- FIG. 2: shows a security scheme for performing software/OS update on the eSIM provisioning system of Fig. 1;
- FIG. 3: shows a modified security scheme for performing software/OS update according to an embodiment of the invention;
- FIG. 4: shows a flow chart of a method for providing a software image to a secure element according to an embodiment; and
- FIGs. 5 to 7: show implementations of the steps of the method of Fig. 4 according to preferred embodiments.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments. In addition, it is to be understood that the position or arrangement of individual elements within each disclosed embodiment may be modified. The following detailed description is, therefore, not to be taken in a limiting sense, and the scope of the present invention is defined only by the appended claims. In the drawings, like numerals refer to the same or similar functionality throughout the several views.

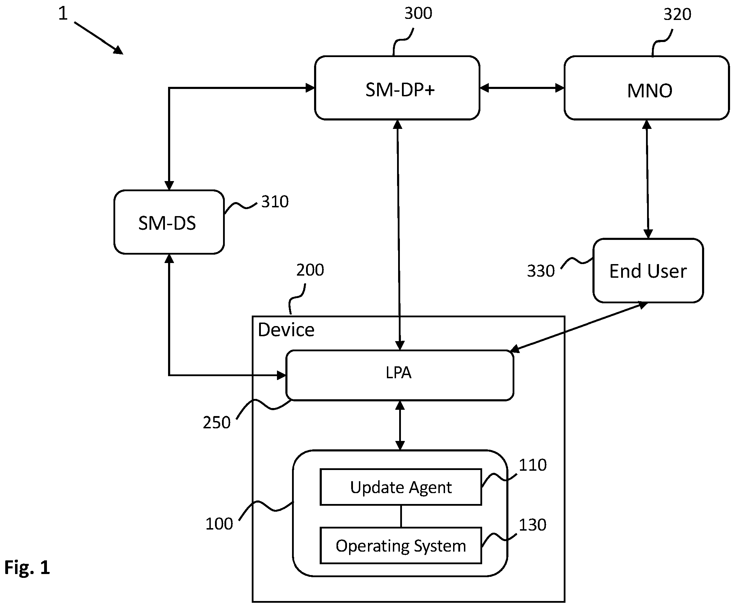

Fig. 1 shows an exemplary architecture of a SM-DP+ based system 1, in accordance with certain embodiments of the present invention. The architecture is an adaptation of the GSMA architecture described in SGP.22 RSP Technical Specification, Version 2.0, issued by the GSM Association (in the following referred to as GSMA RSP 22). The eSIM provisioning system 1 is organized around several elements: the SM-DP+ (Subscription Manager - Data Preparation and Secure Routing, 300), the SM-DS (Subscription Manager - Discovery Server, 310), the LPA (Local Profile Assistance, 250) and the eUICC, 100, the latter being part of a mobile device 200, of an end user 330.

The SM-DP+ 300 is responsible for the creation, download, remote management (enable, disable, update, delete) and the protection of subscriber profiles provided by the MNO 320. In particular, the SM-DP+ 300 may be configured to provide a profile in a Bound Profile Package or Bound Installation Package, and enable the Bound Profile/Installation Package to be securely transmitted.

The LPA (Local Profile Assistant, 250) is a set of functions in the device 200 responsible for providing the capability to download (encrypted) profiles to the eUICC/TRE/SE 100. It also presents the local management end user interface to the end user 330 so they can manage the status of profiles on the eUICC/TRE/SE 100.

The SM-DS 310 provides means for the SM-DP+ 300 to communicate with the eUICC/TRE/SE 100.

The external device 200 may describe an entity which is in control and communicates with the SE 100. It can be a mobile terminal, or whatever device it is that the SE is mounted on.

The update agent 110 is the entity within the secure element 100 (separated from the OS 130) in charge of receiving an installation package and performing the software update. The update agent is loaded onto the secure element or TRE together with an (initial) Operative System (OS, 130 in Fig. 1), during the factory production of the secure element 100. Initially, the OS 130 is assumed to be in control, meaning it is the OS which is executed when the TRE 100 boots.

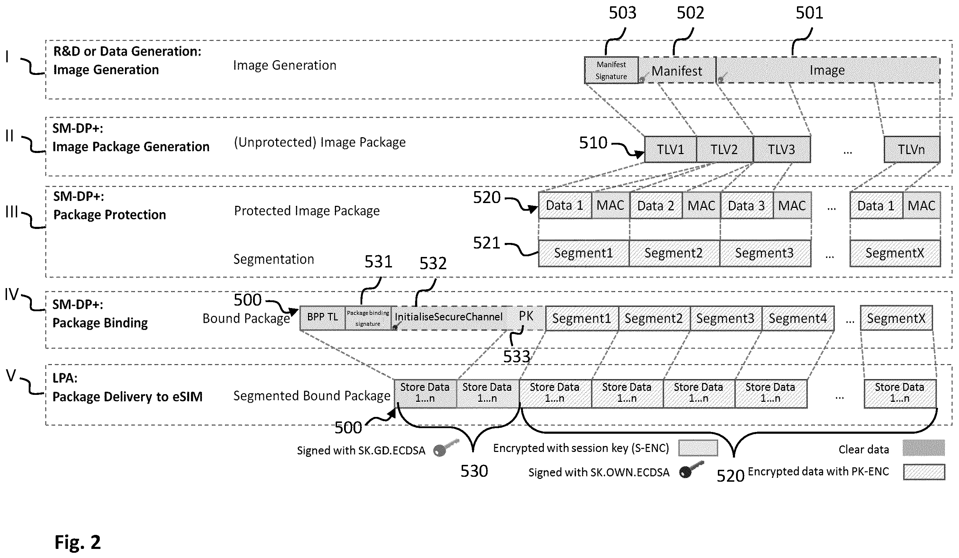

Fig. 2 shows a software update security scheme to provide a software image (e.g., operating system, OS, image) through a bound installation package (for short, installation package) to the secure element 100 of Fig. 1. The scheme to provide the software image for the update adapts the general scheme known from GSMA RSP 22 to the architecture of Figure 1.

The diagram in Fig. 2 illustrates the various formats a profile package (i.e., a Bound Installation Profile) will take from its generation to being download onto the secure element. In particular, the Bound Installation Profile is created in several stages I to V beginning with the software image by performing several operations such as prepending and segmentation.

In the first stage I, the image 501, provided by an image issuer, is prepended with a manifest 502 and a manifest signature 501. The manifest 502 contains information pertaining to the new software image to be uploaded and ensures the image is acceptable and the issuer is trusted. The resulted block contains clear data that is not encrypted yet.

In stage II, the SM-DP+ 300 may generate, from the package obtained in stage I, an unprotected image package containing a sequence of profile element TLVs (Tag Length Values) TLV1, ..., TLVn, 510. Preferably, the TLVs are in accordance with the SIMalliance eUICC Profile Package: Interoperable Format Technical Specification V2.0.

In stage III, the SM-DP+ 300 may generate from the unprotected package profile, a protected package profile, by applying TLV encryption and MAC-ing. These operations may preferably follow the scheme described in GSMA "Remote Provisioning of Embedded UICC Technical specification" V3.1. Preferably, TLV encryption is done by applying a private profile protection key PK-ENC, generated by the SM-DP+ 300. The resulting data block is split into segments 1 to X, 521.

In stage IV the SM-DP+ 300 may generate a Bound Installation Profile package 500, by linking or binding the protected image package obtained in stage III to a particular eSIM/eUICC. This is done via a key agreement between the eSIM and the SM-DP+.

Finally, in stage V the Bound Installation Profile package 500, with header part 530 and data-carrying part 520, is segmented into blocks, and delivered to the update agent 110 on the eSIM or secure element 100. Preferably, the segments are sent via STORE DATA commands.

The scheme in Fig. 2 is based on the SCP03t algorithm (as for example, described in SGP.02 - v4.2 section 4.1.3.3) for implementing encryption and authentication in stage III. In particular, the SCP03t algorithm involves two different encryption algorithms defined in the Advanced Encryption Standard (AES), namely a first algorithm, AES CBC, to ensure confidentiality and a second algorithm, AES CMAC, to grant authentication and integrity. That is, SCP03t follows the Encrypt-the-MAC style, having separate algorithms for encryption and integrity/authenticity.

The above-described software update security scheme, which may be implemented on the adapted GSMA Remote Provisioning Architecture of Fig. 1, requires several exchanges between the secure element (or TRE) 100 and the SM-DP+ server 300 before it can prepare the Bound Profile Package used for the load, which might not be optimal for a broadcast deploy of a new piece of software. This scheme also lacks extra layers of protection which might be required for the deployment of critical data such as a new OS.

In addition, the update agent within the secure element, needs to perform time consuming decryption algorithms to be able to extract the software update from the received installation packages.

Thus, customers' requirements of minimizing delays during software update cannot be fulfilled when implementing the above-described security scheme.

To addresses this problem, the present invention proposes a method, apparatus and system for managing the encryption of the image segments in a more efficient way. In particular, a faster encryption scheme is proposed for being implemented by the SM-DP+ server 300 in stage III of the security scheme of Fig. 2.

The proposed encryption scheme is based on the AES GCM (Galois/Counter Mode). AES GCM grants both confidentiality and authenticity without the need for the MAC to be added, and using only one AES calculation per block of data together with a Galois field multiplication.

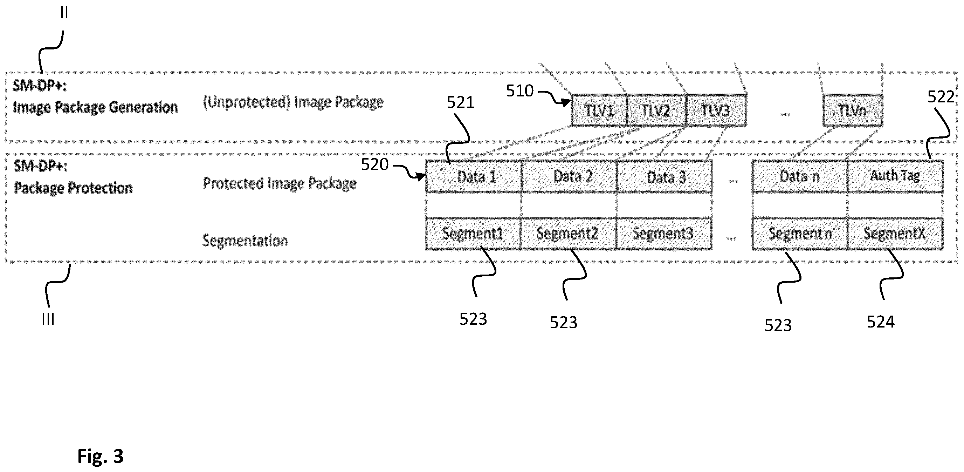

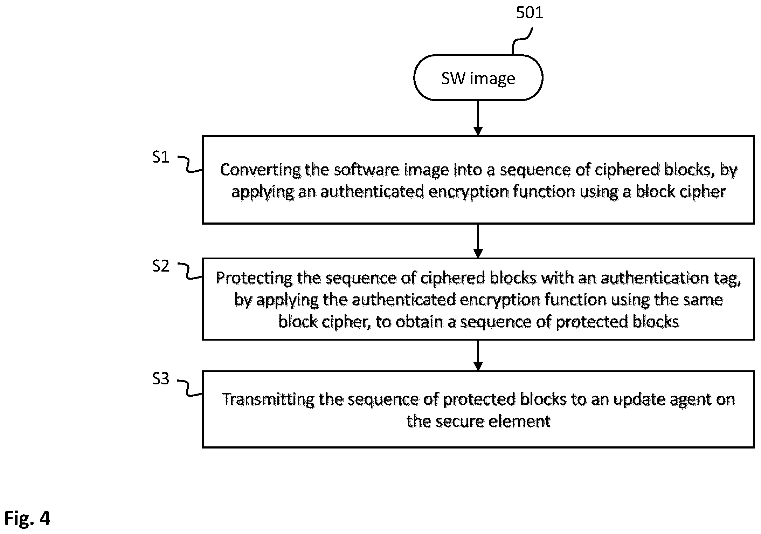

Fig. 3 shows a modified security scheme for generating a protected software package to be used for performing software/OS update according to an embodiment of the invention. The modified security scheme is based on a novel package protection scheme, implemented in stage III, which will be described further down with reference to Figures 4 to 7.

Each of the n segments 523 carries ciphered blocks 521, which are blocks or segments containing the encrypted software image. The last segment 524 carries an authentication tag 522. The authentication tag may be a cryptographic checksum on the encrypted data within the ciphered blocks. The authentication tag may be designed to ensure authenticity of the encrypted data, that is, to reveal accidental errors or intentional modifications of the data.

This new scheme takes advantage of the better overall performance of AES CGM compared to the conventional implementations using two different algorithms. As there is no need any more to send a MAC within each protected image segment, more data can be packed within each segment, reducing thus the size of the entire installation package to be delivered to the secure element.

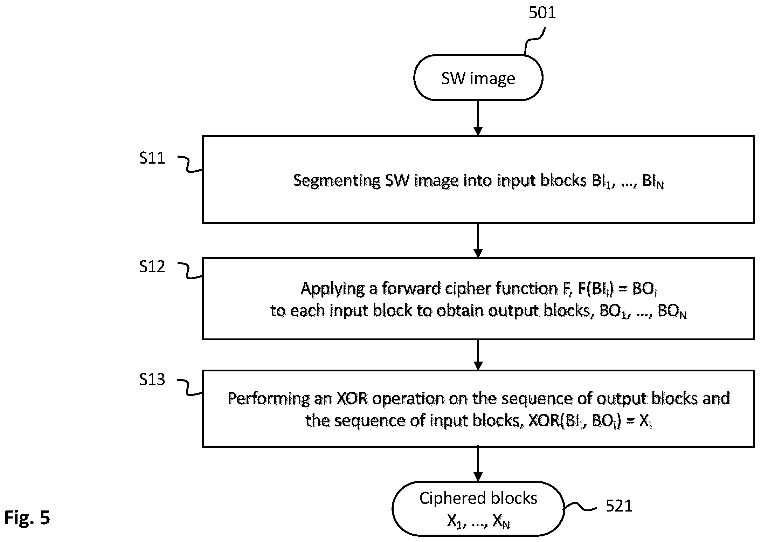

A method for providing a software image to a secure element, which implements the security scheme of Fig. 3, is shown in Figs. 4 to 7. Fig. 4 shows the flow chart of the main steps, while Figs. 5 to 7 show preferred implementations of the mains steps from Fig. 4. The method may be implemented by a server, such as the SM-DP+ server 300 of Fig. 1.

With reference to Fig. 4, in a first step S1 the software image 501 to be provided to the secure element is converted into a sequence of ciphered blocks, by applying an authenticated encryption function using a block cipher. Subsequently, in step S2, the sequence of ciphered blocks is protected with an authentication tag, by applying the authenticated encryption function using the same block cipher, to obtain a sequence of protected blocks. In step S3 the obtained sequence of protected blocks can then be transmitted to the update agent 110.

The authenticated encryption function is applied both for encryption and authentication using the same block cipher. The block cipher may be a parame-terized family of permutations on bit strings of a fixed length. A key, which is also a bit string of a given length, is used for determining the permutation.

An example of an authenticated encryption function is the Galois/Counter Mode (GCM) algorithm for authenticated encryption. GCM is constructed from an approved symmetric key block cipher with a block size of 128 bits, such as the Advanced Encryption Standard (AES) algorithm.

A preferred implementation of above step S1 is now exemplified with reference to Fig. 5.

In step S11 of Fig. 5, the received software image 501 is first segmented into a plurality of input blocks, BI₁, ..., BI_{N}.

The authenticated encryption function is then applied to each of the input blocks, notably, by applying a forward cipher function F to each input block in step S12, and performing an XOR operation block-wise between the resulting blocks and the input blocks in step S13, to obtain the ciphered blocks. That is:
- Input blocks: BI₁, ..., BI_{N}
- Output blocks: BO₁, ..., BO_{N}, with BOᵢ = F(BIᵢ), i=1,...,N
- Ciphered blocks: X₁, ..., X_{N}, with Xᵢ = BOᵢ XOR BIᵢ, i=1,...,N

The forward cipher function F is a permutation on bit strings of a fixed length, as for instance, the forward cipher function CIPH_{K}, with symmetric key K. The key K is generated uniformly and randomly and is secret and used exclusively for GCM with the chosen block cipher.

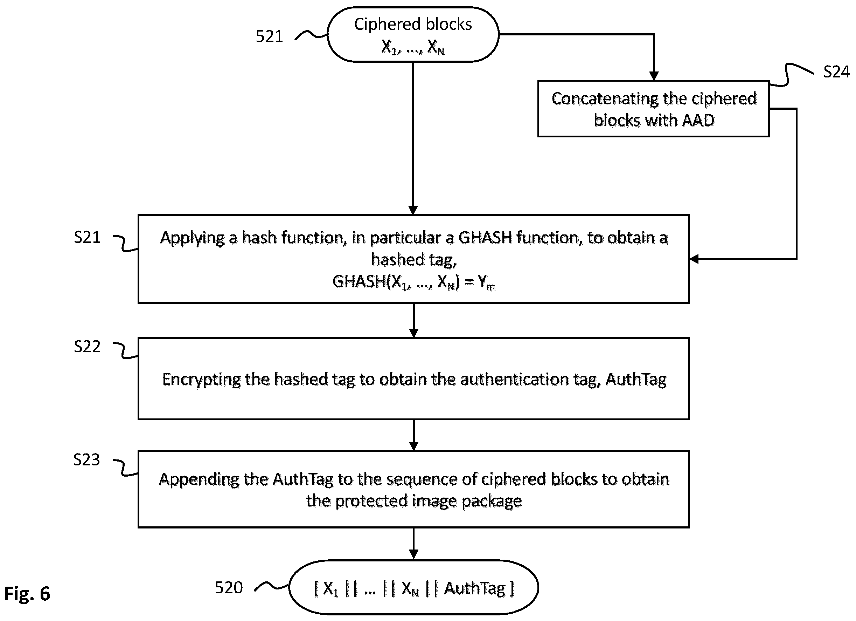

Step S1 of Fig. 4 and corresponding sub-steps S11 to S13 of Fig. 5 implements a confidentiality mechanism. Step S2 of Fig. 4 and corresponding sub-steps S21 to S23 of Fig. 6 implements an authentication mechanism on the ciphered blocks obtained in step S1.

With reference to Fig. 6, the ciphered blocks X₁, ..., X_{N} are subjected to an authentication operation using a hash function.

Optionally, before the hash function is applied, additional authenticated data (AAD) may be appended to the ciphered blocks in step S24. The AAD may include network addresses, ports, protocol version numbers and other fields indicating how the plain text, that is, the software image, should be treated. The AAD data is clear, that is, not encrypted.

In step S21 a hash function may be applied on the sequence of ciphered blocks. The hash function is generated using the same block cipher that was used for confidentiality protection. Examples of such a hash function include a GHASH function based on operations in a finite Galois field, as defined in the NIST Special Publication 800-38D: Recommendation for Block Cipher Modes of Operation GCM, Nov. 2007 $GHASH \left({X}_{1}, …, {X}_{N}\right) = {Y}_{m}$ wherein X₁, ..., X_{N} denote the sequence of ciphered blocks and Yₘ the hashed tag obtained by applying the hash function.

In a further step S22, the hashed tag Yₘ is encrypted to obtain the authentication tag, AuthTag 522 (c.f., Fig. 3). Preferably, the encryption is performed using a nonce, such as an initialization vector with strict uniqueness requirements.

The obtained authentication tag is finally appended to the sequence of ciphered blocks, [X₁ ∥ ... ∥ X_{N} ∥ AuthTag], obtaining therewith the protected image package 520 depicted in Fig. 3.

The protected image package 520 is transmitted in step S3 of the flow chart in Fig. 4 to the update agent 110.

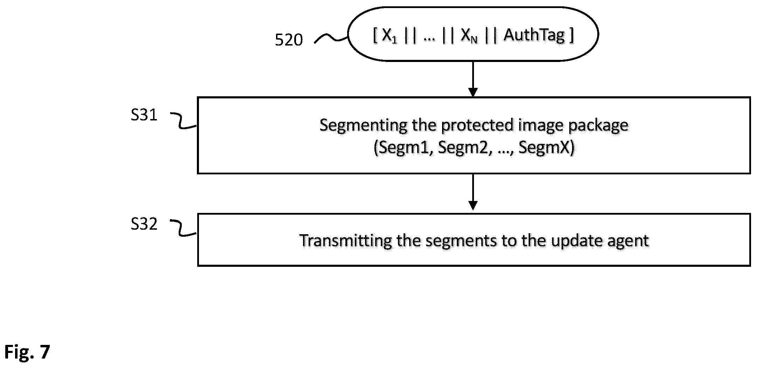

A preferred implementation of step S3 is illustrated in Fig. 7. The protected image package 520 is segmented in a step S31 into a sequence of protected blocks 523, 524 as depicted in Fig. 3, which are then transmitted in step S32 to the update agent. Preferably, the first to but-last segments 523 carry parts of the encrypted software image and the last segment 524 carries the authentication tag.

In a further aspect of the present invention, there is provided a server configured to implement the above-described method. The server may be the SM-DP+ server 300 from Fig. 1. The server 300 may be configured to generate a bound installation package 500 according to the security scheme of Fig. 3, and to provide the bound installation package 500 to a secure element 100.

In particular, the server 300 may be configured to generate the bound installation package 500 from a software image 501 by implementing an authenticated encryption function using a block cipher to encrypt the software image 501 and to compute an authentication tag 522 on the encrypted software image. Furthermore, the server may be configured to perform all steps and sub-steps of the method according to the embodiments shown in Figs. 4 to 7.

The mobile network system 1 of Fig. 1 is an exemplary system implementing within the SM-DP+ server 300 the encryption scheme of Fig. 3 by the method of Figs. 4 to 7, in accordance with certain embodiments of the present invention.

In a further aspect of the present invention, there is provided an update agent 110 for use in a secure element 100 to install a software update on the secure element 100. The update agent may be the update agent 100 depicted in Fig. 1. The update agent is configured to implement a security scheme such as the security scheme depicted in Fig. 3.

In particular, the update agent 110 may receive a sequence of protected segments 523 containing a software image 501 for performing the software update. The sequence may have been generated by the method according to embodiments of the present invention, as described above with reference to Figs. 4 to 7. Upon receiving the sequence of protected segments, the update agent 110 may implement an authenticated decryption function to extract the software image 501.

Preferably, the update agent implements the GCM Authenticated Decryption function, which is an inverse of the authenticated encryption function implemented by the SM-DP+ server 300. Using this function, the ciphertext, that is the sequence of protected segments is decrypted into plaintext, and the authenticity of the ciphertext is verified. The update agent 110 may extract the software image from the decrypted plaintext, may verify the authentication tag, and may perform the software update using the software image if the authentication tag is verified. In case the verification of the authentication tag fails, the update agent may return a failure message to the secure element and/or device.

The aspects and embodiments described herein provide an efficient and secure solution for managing the encryption of a software image to be updated on a secure element.

The proposed bound package encryption takes advantage of the better overall performance of AES CGM compared to the conventional SCP03t-based implementations. Each protected segment, sent to the update agent, carries only payload data, without the need to include a Message Authentication Code, MAC, which is in general 8 bytes long. Data to be transmitted to the update agent can thus be packed within a smaller number of segments, reducing therefor the size of the complete delivery package. This in turn will allow the update agent component within the secure element to occupy a smaller footprint, allowing it to target secure elements with smaller available memory.

The possibility to update the software in the tamper resistant element TRE or secure element SE with the proposed scheme would prove useful for updating the operating system in a TRE to keep up to date with the evolution of the market, as well as to provide patches and security and bug fixes at any point in the life cycle of the TRE.

In the foregoing specification, the invention has been described with reference to specific embodiments thereof. It will, however, be evident that various modifications and changes may be made thereto. For example, the above-described process flows are described with reference to a particular ordering of process actions. However, the ordering of many of the described process actions may be changed. The specification and drawings are, accordingly, to be regarded in an illustrative rather than restrictive sense.

## Claims

1. A method for providing a software image to a secure element, the method comprising:
- converting (S1) the software image into a sequence of ciphered blocks;
- protecting (S2) the sequence of ciphered blocks with an authentication tag to obtain a sequence of protected blocks;
- transmitting (S3) the sequence of protected blocks to an update agent (110) on the secure element (100);
- wherein the steps of converting and protecting are implemented by an authenticated encryption function using a same block cipher;
- segmenting (S11) the software image into a sequence of input blocks, wherein the authenticated encryption function encrypts each input block using the block cipher, obtaining therewith the sequence of ciphered blocks;
- wherein the authenticated encryption function encrypts each input block by:
- applying (S12) a forward cipher function of the block cipher to each input block to obtain a sequence of output blocks; and
- performing (S13) an exclusive-OR operation on each pair of an input block and corresponding output block to obtain the sequence of ciphered blocks;
- the method further comprising concatenating (S24) the sequence of ciphered blocks with additional authentication data;
- wherein the authenticated encryption function applies (S21) a hash function to the sequence of ciphered blocks to obtain a hashed tag, wherein the hash function is generated using the block cipher;
- the method further comprising encrypting (S22) the hashed tag using a nonce to obtain the authentication tag;
- the method further comprising appending (S23) the authentication tag to the concatenated sequence of ciphered blocks to obtain the sequence of protected blocks.

2. The method according to claim 1, wherein the hash function is a GHASH function based on operations in a finite Galois field.

3. The method of claim 1 or 2, wherein transmitting (S3) the sequence of protected blocks to the update agent within the secure element comprises segmenting (S31) the sequence of protected blocks, wherein the first to but-last segments carry parts of the encrypted software image and the last segment carries the authentication tag; and transmitting (S32) the segments to the update agent (110).

4. A server (300), namely a subscription manager data preparation server, configured to provide protected software updates to a secure element (100) through a bound installation package (500), the server (300) being configured to generate the bound installation package (500) from a software image (501) by implementing an authenticated encryption function using a block cipher to encrypt the software image (501) and to compute an authentication tag (522) on the encrypted software image, wherein the server (300) is configured to perform the method according to any one of claims 1 to 3.

5. A mobile network system (1) for providing services to a mobile device (200), the mobile device (200) comprising a secure element (100), the system (1) comprising a server (300), namely a subscription manager data preparation server, configured to provide protected software updates to the secure element (100) through a bound installation package (500); wherein the server (300) is configured to generate the bound installation package (500) from a software image (501) comprising the protected software updates by performing:
- implementing an authenticated encryption function using a block cipher to encrypt the software image (501) using the block cipher and to compute an authentication tag (522) on the encrypted software image using the same block cipher; and
- transmitting the sequence of protected blocks to an update agent (110) on the secure element (100);
wherein the server (300) is configured to perform the method according to any one of claims 1 to 3.

6. An update agent (110) for use in a secure element (100) to install a software update on the secure element (100), the update agent (110) being configured to:
- receive a sequence of protected segments (523) containing a software image (501) for performing the software update, the sequence of protected segments (523) having been generated by the method of any one of claims 1 to 3 and comprising a sequence of ciphered blocks (521) and an authentication tag (522); and
- implement an authenticated decryption function to extract the software image (501) from the sequence of ciphered blocks (521); and to authenticate the software image (501) by verifying the authentication tag (522).

7. The update agent (110) according to claim 6, wherein the update agent (110) is configured to perform a software update using the software image (501) if the authentication tag (522) is verified, and to return a failure message otherwise.

8. A non-transitory computer-readable medium for providing a protected software image to a secure element (100), comprising instructions stored thereon, that when executed on a processor, perform the steps of:
- generating a bound installation package (500) from a software image (501) by implementing an authenticated encryption function to encrypt the software image (501) and to compute an authentication tag (522) on the encrypted software image using a block cipher; and
- transmitting the bound installation package to an update agent (110) on the secure element (100);
- wherein the instructions, when executed on the processor, perform the steps of any one of claims 1 to 3.

## Patentansprüche

1. Verfahren zum Bereitstellen eines Software-Images für ein sicheres Element, wobei das Verfahren umfasst:
- Umwandeln (S1) des Software-Images in eine Sequenz von verschlüsselten Blöcken;
- Schützen (S2) der Sequenz von verschlüsselten Blöcken mit einem Authentifizierungs-Tag, um eine Sequenz von geschützten Blöcken zu erhalten;
- Übertragen (S3) der Sequenz von geschützten Blöcken an einen Aktualisierungsagenten (110) auf dem sicheren Element (100);
- wobei die Schritte des Umwandelns und Schützens durch eine authentifizierte Verschlüsselungsfunktion unter Verwendung einer gleichen Blockverschlüsselung implementiert werden;
- Segmentieren (S11) des Software-Images in eine Sequenz von Eingabeblöcken, wobei die authentifizierte Verschlüsselungsfunktion jeden Eingabeblock unter Verwendung der Blockverschlüsselung verschlüsselt, wodurch die Sequenz von verschlüsselten Blöcken erhalten wird;
- wobei die authentifizierte Verschlüsselungsfunktion jeden Eingabeblock verschlüsselt durch:
- Anwenden (S12) einer Vorwärtsverschlüsselungsfunktion der Blockverschlüsselung auf jeden Eingabeblock, um eine Sequenz von Ausgabeblöcken zu erhalten; und
- Durchführen (S13) einer Exklusiv-ODER-Operation an jedem Paar eines Eingabeblocks und eines entsprechenden Ausgabeblocks, um die Sequenz von verschlüsselten Blöcken zu erhalten;
- wobei das Verfahren ferner das Verketten (S24) der Sequenz von verschlüsselten Blöcken mit zusätzlichen Authentifizierungsdaten umfasst;
- wobei die authentifizierte Verschlüsselungsfunktion eine Hash-Funktion auf die Sequenz von verschlüsselten Blöcken anwendet (S21), um ein Hash-Tag zu erhalten, wobei die Hash-Funktion unter Verwendung der Blockverschlüsselung erzeugt wird;
- wobei das Verfahren ferner das Verschlüsseln (S22) des Hash-Tags unter Verwendung einer Nonce umfasst, um das Authentifizierungstag zu erhalten;
- wobei das Verfahren ferner das Anhängen (S23) des Authentifizierungstags an die verkettete Sequenz von verschlüsselten Blöcken umfasst, um die Sequenz von geschützten Blöcken zu erhalten.

2. Verfahren nach Anspruch 1, wobei die Hash-Funktion eine GHASH-Funktion ist, die auf Operationen in einem endlichen Galois-Feld basiert.

3. Verfahren nach Anspruch 1 oder 2, wobei das Übertragen (S3) der Sequenz von geschützten Blöcken an den Aktualisierungsagenten innerhalb des sicheren Elements das Segmentieren (S31) der Sequenz von geschützten Blöcken umfasst, wobei die ersten bis vorletzten Segmente Teile des verschlüsselten Software-Images tragen und das letzte Segment das Authentifizierungstag trägt; und Übertragen (S32) der Segmente an den Aktualisierungsagenten (110).

4. Server (300), nämlich ein Server zur Datenaufbereitung für den Abonnement-Manager (subscription manager data preparation server), der konfiguriert ist, geschützte Software-Aktualisierungen für ein sicheres Element (100) durch ein gebundenes Installationspaket (500) bereitzustellen, wobei der Server (300) konfiguriert ist, das gebundene Installationspaket (500) aus einem Software-Image (501) durch Implementieren einer authentifizierten Verschlüsselungsfunktion unter Verwendung einer Blockverschlüsselung zu erzeugen, um das Software-Image (501) zu verschlüsseln und ein Authentifizierungstag (522) auf dem verschlüsselten Software-Image zu berechnen, wobei der Server (300) konfiguriert ist, das Verfahren nach einem der Ansprüche 1 bis 3 durchzuführen.

5. Mobiles Netzwerksystem (1) zum Bereitstellen von Diensten für eine mobile Vorrichtung (200), wobei die mobile Vorrichtung (200) ein sicheres Element (100) umfasst, wobei das System (1) einen Server (300), nämlich einen Server zur Datenaufbereitung für den Abonnement-Manager (subscription manager data preparation server), umfasst, der konfiguriert ist, geschützte Software-Aktualisierungen für das sichere Element (100) durch ein gebundenes Installationspaket (500) bereitzustellen; wobei der Server (300) konfiguriert ist, das gebundene Installationspaket (500) aus einem Software-Image (501), das die geschützten Software-Aktualisierungen umfasst, durch Durchführen von Folgendem zu erzeugen:
- Implementieren einer authentifizierten Verschlüsselungsfunktion unter Verwendung einer Blockverschlüsselung, um das Software-Image (501) unter Verwendung der Blockverschlüsselung zu verschlüsseln und ein Authentifizierungstag (522) auf dem verschlüsselten Software-Image unter Verwendung der gleichen Blockverschlüsselung zu berechnen; und
- Übertragen der Sequenz von geschützten Blöcken an einen Aktualisierungsagenten (110) auf dem sicheren Element (100);
wobei der Server (300) konfiguriert ist, das Verfahren nach einem der Ansprüche 1 bis 3 durchzuführen.

6. Aktualisierungsagent (110) zur Verwendung in einem sicheren Element (100), um eine Software-Aktualisierung auf dem sicheren Element (100) zu installieren, wobei der Aktualisierungsagent (110) konfiguriert ist zum:
- Empfangen einer Sequenz von geschützten Segmenten (523), die ein Software-Image (501) zum Durchführen der Software-Aktualisierung enthalten, wobei die Sequenz von geschützten Segmenten (523) durch das Verfahren nach einem der Ansprüche 1 bis 3 erzeugt wurde und eine Sequenz von verschlüsselten Blöcken (521) und ein Authentifizierungstag (522) umfasst; und
- Implementieren einer authentifizierten Entschlüsselungsfunktion, um das Software-Image (501) aus der Sequenz von verschlüsselten Blöcken (521) zu extrahieren; und um das Software-Image (501) durch Verifizieren des Authentifizierungstags (522) zu authentifizieren.

7. Aktualisierungsagent (110) nach Anspruch 6, wobei der Aktualisierungsagent (110) konfiguriert ist, eine Software-Aktualisierung unter Verwendung des Software-Images (501) durchzuführen, wenn das Authentifizierungstag (522) verifiziert ist, und andernfalls eine Fehlermeldung zurückzugeben.

8. Nichtflüchtiges computerlesbares Medium zum Bereitstellen eines geschützten Software-Images für ein sicheres Element (100), das darauf gespeicherte Anweisungen umfasst, die, wenn sie auf einem Prozessor ausgeführt werden, die folgenden Schritte durchführen:
- Erzeugen eines gebundenen Installationspakets (500) aus einem Software-Image (501) durch Implementieren einer authentifizierten Verschlüsselungsfunktion, um das Software-Image (501) zu verschlüsseln und ein Authentifizierungstag (522) auf dem verschlüsselten Software-Image unter Verwendung einer Blockverschlüsselung zu berechnen; und
- Übertragen des gebundenen Installationspakets an einen Aktualisierungsagenten (110) auf dem sicheren Element (100);
- wobei die Anweisungen, wenn sie auf dem Prozessor ausgeführt werden, die Schritte nach einem der Ansprüche 1 bis 3 durchführen.

## Revendications

1. Procédé de fourniture d'une image logicielle à un élément sécurisé, le procédé comprenant:
- la conversion (S1) de l'image logicielle en une séquence de blocs chiffrés;
- la protection (S2) de la séquence de blocs chiffrés avec une étiquette d'authentification pour obtenir une séquence de blocs protégés;
- la transmission (S3) de la séquence de blocs protégés à un agent de mise à jour (110) sur l'élément sécurisé (100);
- dans lequel les étapes de conversion et de protection sont mises en œuvre par une fonction de chiffrement authentifiée utilisant un même chiffrement de bloc;
- la segmentation (S11) de l'image logicielle en une séquence de blocs d'entrée, dans lequel la fonction de chiffrement authentifiée chiffre chaque bloc d'entrée en utilisant le chiffrement de bloc, obtenant ainsi la séquence de blocs chiffrés;
- dans lequel la fonction de chiffrement authentifiée chiffre chaque bloc d'entrée par:
- l'application (S12) d'une fonction de chiffrement direct du chiffrement de bloc à chaque bloc d'entrée pour obtenir une séquence de blocs de sortie; et
- l'exécution (S13) d'une opération OU exclusif sur chaque paire d'un bloc d'entrée et d'un bloc de sortie correspondant pour obtenir la séquence de blocs chiffrés;
- le procédé comprenant en outre la concaténation (S24) de la séquence de blocs chiffrés avec des données d'authentification supplémentaires;
- dans lequel la fonction de chiffrement authentifiée applique (S21) une fonction de hachage à la séquence de blocs chiffrés pour obtenir une étiquette hachée, dans lequel la fonction de hachage est générée en utilisant le chiffrement de bloc;
- le procédé comprenant en outre le chiffrement (S22) de l'étiquette hachée en utilisant un nonce pour obtenir l'étiquette d'authentification;
- le procédé comprenant en outre l'ajout (S23) de l'étiquette d'authentification à la séquence concaténée de blocs chiffrés pour obtenir la séquence de blocs protégés.

2. Procédé selon la revendication 1, dans lequel la fonction de hachage est une fonction GHASH basée sur des opérations dans un champ de Galois fini.

3. Procédé selon la revendication 1 ou 2, dans lequel la transmission (S3) de la séquence de blocs protégés à l'agent de mise à jour dans l'élément sécurisé comprend la segmentation (S31) de la séquence de blocs protégés, dans lequel les premier à avant-dernier segments portent des parties de l'image logicielle chiffrée et le dernier segment porte l'étiquette d'authentification; et la transmission (S32) des segments à l'agent de mise à jour (110).

4. Serveur (300), à savoir un serveur de préparation de données de gestionnaire d'abonnement, configuré pour fournir des mises à jour logicielles protégées à un élément sécurisé (100) par l'intermédiaire d'un package d'installation lié (500), le serveur (300) étant configuré pour générer le package d'installation lié (500) à partir d'une image logicielle (501) en mettant en œuvre une fonction de chiffrement authentifiée utilisant un chiffrement de bloc pour chiffrer l'image logicielle (501) et pour calculer une étiquette d'authentification (522) sur l'image logicielle chiffrée, dans lequel le serveur (300) est configuré pour effectuer le procédé selon l'une quelconque des revendications 1 à 3.

5. Système de réseau mobile (1) pour fournir des services à un dispositif mobile (200), le dispositif mobile (200) comprenant un élément sécurisé (100), le système (1) comprenant un serveur (300), à savoir un serveur de préparation de données de gestionnaire d'abonnement, configuré pour fournir des mises à jour logicielles protégées à l'élément sécurisé (100) par l'intermédiaire d'un package d'installation lié (500); dans lequel le serveur (300) est configuré pour générer le package d'installation lié (500) à partir d'une image logicielle (501) comprenant les mises à jour logicielles protégées en effectuant:
- la mise en œuvre d'une fonction de chiffrement authentifiée utilisant un chiffrement de bloc pour chiffrer l'image logicielle (501) en utilisant le chiffrement de bloc et pour calculer une étiquette d'authentification (522) sur l'image logicielle chiffrée en utilisant le même chiffrement de bloc; et
- la transmission de la séquence de blocs protégés à un agent de mise à jour (110) sur l'élément sécurisé (100);
dans lequel le serveur (300) est configuré pour effectuer le procédé selon l'une quelconque des revendications 1 à 3.

6. Agent de mise à jour (110) destiné à être utilisé dans un élément sécurisé (100) pour installer une mise à jour logicielle sur l'élément sécurisé (100), l'agent de mise à jour (110) étant configuré pour:
- recevoir une séquence de segments protégés (523) contenant une image logicielle (501) pour effectuer la mise à jour logicielle, la séquence de segments protégés (523) ayant été générée par le procédé selon l'une quelconque des revendications 1 à 3 et comprenant une séquence de blocs chiffrés (521) et une étiquette d'authentification (522); et
- mettre en œuvre une fonction de déchiffrement authentifiée pour extraire l'image logicielle (501) de la séquence de blocs chiffrés (521); et pour authentifier l'image logicielle (501) en vérifiant l'étiquette d'authentification (522).

7. Agent de mise à jour (110) selon la revendication 6, dans lequel l'agent de mise à jour (110) est configuré pour effectuer une mise à jour logicielle en utilisant l'image logicielle (501) si l'étiquette d'authentification (522) est vérifiée, et pour renvoyer un message d'échec dans le cas contraire.

8. Support non transitoire lisible par ordinateur pour fournir une image logicielle protégée à un élément sécurisé (100), comprenant des instructions stockées sur celui-ci, qui, lorsqu'elles sont exécutées sur un processeur, effectuent les étapes consistant à:
- générer un package d'installation lié (500) à partir d'une image logicielle (501) en mettant en œuvre une fonction de chiffrement authentifiée pour chiffrer l'image logicielle (501) et pour calculer une étiquette d'authentification (522) sur l'image logicielle chiffrée en utilisant un chiffrement de bloc; et
- transmettre le package d'installation lié à un agent de mise à jour (110) sur l'élément sécurisé (100);
- dans lequel les instructions, lorsqu'elles sont exécutées sur le processeur, effectuent les étapes de l'une quelconque des revendications 1 à 3.
